# EUROPÄISCHE PATENTSCHRIFT

(11) **EP 2 114 600 B1**
(45) Veröffentlichungstag und Bekanntmachung des Hinweises auf die Patenterteilung: **07.06.2017**
(21) Anmeldenummer: 08707971.1
(22) Anmeldetag: 17.01.2008
(51) Int. Cl.: B23B 29/034

(54) **AUSGEWUCHTETES AUSBOHRWERKZEUG**
COUNTERBALANCED BORING TOOL
OUTIL D'ALÉSAGE ÉQUILIBRÉ

(30) Priorität: 29.01.2007 DE 102007004385
(43) Veröffentlichungstag der Anmeldung: 11.11.2009
(73) Patentinhaber: Sandvik Intellectual Property AB, 811 81 Sandviken (SE)
(72) Erfinder: FRANK, Peter, 98593 Floh-Seligenthal (DE); NEUMANN, Jens, 98574 Schmalkalden (DE)
(74) Vertreter: WSL Patentanwälte Partnerschaft mbB
(86) Internationale Anmeldenummer: PCT/EP2008/050525
(87) Internationale Veröffentlichungsnummer: WO 2008/092751

(56) Entgegenhaltungen:
- EP-A- 0 804 984
- JP-A- 1 171 707
- US-A- 3 180 187
- US-A- 4 004 858
- US-A- 4 899 628

## Beschreibung

Die vorliegende Erfindung betrifft ein Ausbohrwerkzeug gemäß dem Oberbegriff des Patentanspruchs 1, mit einem Werkzeuggrundkörper, an dessen Stirnseite mindestens ein, relativ zum Werkzeuggrundkörper einstellbarer Werkzeugträger vorgesehen ist, wobei der Werkzeugträger in radialer Richtung bewegbar und festspannbar ist.

Solche Ausbohrwerkzeuge werden häufig mit sehr hohen Drehzahlen betrieben, so daß es notwendig ist, das Ausbohrwerkzeug vor dem Betrieb auszuwuchten. Da jede radiale Verstellung des Werkzeugträgers für eine Unwucht sorgt, muß nach jeder solchen Verstellung das Werkzeug neu ausgewuchtet werden. Daher sind bereits Ausbohrwerkzeuge bekannt, die ein Gegengewicht aufweisen, welches mit dem Werkzeugträger derart gekoppelt ist, daß bei einer Bewegung des Werkzeugträgers in eine Richtung eine Bewegung des Gegengewichts im wesentlichen in die entgegengesetzte Richtung erfolgt, wobei sowohl Werkzeugträger als auch Gegengewicht jeweils zumindest teilweise in einer Bohrung im Werkzeuggrundkörper angeordnet sind.

Ein solches Ausdrehwerkzeug, gemäß dem Oberbegriff des Patentanspruchs 1, ist beispielsweise bekannt aus der EP 0 804 984. Dieses Ausbohrwerkzeug weist ein Klemmorgan auf, das gleichzeitig mit Werkzeugträger und Gegengewicht in Kontakt treten soll. Diese Ausführungsform ist sehr aufwendig in der Herstellung. Zudem kann es im Laufe des Gebrauchs vorkommen, daß das Klemmorgan nicht mehr exakt gleichzeitig mit Gegengewicht einerseits und Werkzeugträger andererseits in Kontakt tritt, so daß es möglicherweise nach erfolgter Feinjustierung zu einer kleinen Unwucht kommt. Darüber hinaus sind Gegengewicht und Werkzeugträger in axialer Richtung voneinander beabstandet, so daß jede Verstellung des Werkzeugträgers die im Werkzeug auftretenden Momente verändert.

Ausgehend von diesem Stand der Technik ist es daher Aufgabe der Erfindung, ein Ausdrehwerkzeug der oben genannten Art bereitzustellen, das sich insbesondere für hohe Drehzahlen eignet, günstig herzustellen ist und zudem eine zuverlässige, präzise Auswuchtungsfunktion bereitstellt.

Diese Aufgabe wird durch ein Ausdrehwerkzeug gemäß dem Patentanspruch 1 gelöst. Werkzeugträger und Gegengewicht sind derart angeordnet, daß die Bewegung des Werkzeugträgers und die im wesentlichen entgegengesetzte Bewegung des Gegengewichts auf derselben Achse erfolgt.

Mit anderen Worten sind Werkzeugträger und Gegengewicht in derselben Bohrung im Werkzeuggrundkörper angeordnet.

Durch diese Anordnung ist sichergestellt, daß sich der Schwerpunkt auch in der Ebene des Werkzeugträgers nicht ändert, so daß die Kräfte innerhalb des Werkzeuges reduziert werden. Die Summe der Radialkräfte ist vorzugsweise Null.

In einer bevorzugten Ausführungsform weist der Werkzeuggrundkörper eine Klemmeinrichtung auf, mit deren Hilfe der Werkzeuggrundkörper elastisch verformt werden kann, so daß zumindest Werkzeugträger und gegebenenfalls auch Gegengewicht in der Bohrung festgeklemmt werden.

Durch die elastische Verformung des Werkzeuggrundkörper kommt es zu einer Verspannung von Gegengewicht und Werkzeugträger in der Bohrung, so daß beide Teile umschließend festgeklemmt werden.

Um eine solche elastische Verformung zu ermöglichen, kann der Werkzeuggrundkörper beispielsweise einen Schlitz aufweisen, so daß durch die elastische Verformung mit Hilfe der Klemmeinrichtung der Schlitz schmaler wird.

Die Klemmeinrichtung kann beispielsweise aus einer Klemmschraube bestehen, die in eine Gewindebohrung im Werkzeuggrundkörper eingreift.

Besonders bevorzugt tritt die Klemmeinrichtung weder mit dem Werkzeugträger noch mit dem Gegengewicht in direkten Kontakt. Dadurch ist gewährleistet, daß Werkzeugträger und Gegengewicht durch die Verspannung des Werkzeuggrundkörpers und nicht durch Inkontakttreten mit der Klemmeinrichtung im Werkzeuggrundkörper verspannt werden.

In einer weiteren besonders bevorzugten Ausführungsform ist eine Führung zum Führen des Gegengewichts in der Bohrung vorgesehen. Diese dient dazu, die exakte Bewegung des Gegengewichts in der Bohrung zu gewährleisten. Die Führung kann beispielsweise aus einer Ausnehmung und einem Vorsprung, vorzugsweise aus einer Führungsnut und einem Führungsstift, bestehen. Zweckmäßigerweise ist die Führungsausnehmung am Gegengewicht vorgesehen und der Führungsvorsprung am Werkzeuggrundkörper. Der Vorsprung greift in die Ausnehmung und verhindert so eine Drehung des Gegengewichts um seine Achse innerhalb der Bohrung.

In einer weiteren besonders bevorzugten Ausführungsform ist für die Bewegung des Werkzeugträgers im Werkzeuggrundkörper ein Schraubelement mit zwei Gewinden (Doppelgewinde) vorgesehen, wobei das eine Gewinde mit dem Werkzeugträger und das andere Gewinde mit dem Gegengewicht in Eingriff steht.

Durch Drehen des Schraubelements kommt es somit zu einer entgegengerichteten Bewegung von Gegengewicht einerseits und Werkzeugträger andererseits. Da Gegengewicht und Werkzeugträger möglicherweise unterschiedliche Massen haben, können die beiden Gewinde auch eine unterschiedliche Steigung aufweisen, so daß sich bei einer kleinen Bewegung des schwereren Elements das leichtere Element entsprechend stärker in die entgegengesetzte Richtung bewegt.

Weiterhin ist in einer besonders bevorzugten Ausführungsform vorgesehen, daß Werkzeugträger und Gegengewicht aus Materialien unterschiedlicher Dichte bestehen, wobei vorzugsweise das Material des Gegengewichts eine höhere Dichte hat als das Material des Werkzeugträgers.

Mit Vorteil ist mindestens ein Gewinde vorzugsweise das mit dem Werkzeugträger in Eingriff tretende Gewinde als Feingewinde ausgebildet. Dadurch ist eine hochpräzise Auswuchtung möglich.

Weitere Vorteile, Merkmale und Anwendungsmöglichkeiten der vorliegenden Erfindung werden deutlich anhand der folgenden Beschreibung einer bevorzugten Ausführungsform sowie der dazugehörigen Figuren. Es zeigen:
- Figur 1: eine Längsschnittansicht einer Ausführungsform des erfindungsgemäßen Bohrwerkzeugs,
- Figur 2: eine Schnittansicht entlang der Linie B-B von Figur 1 und
- Figur 3: eine Schnittansicht entlang der Linie C-C von Figur 1.

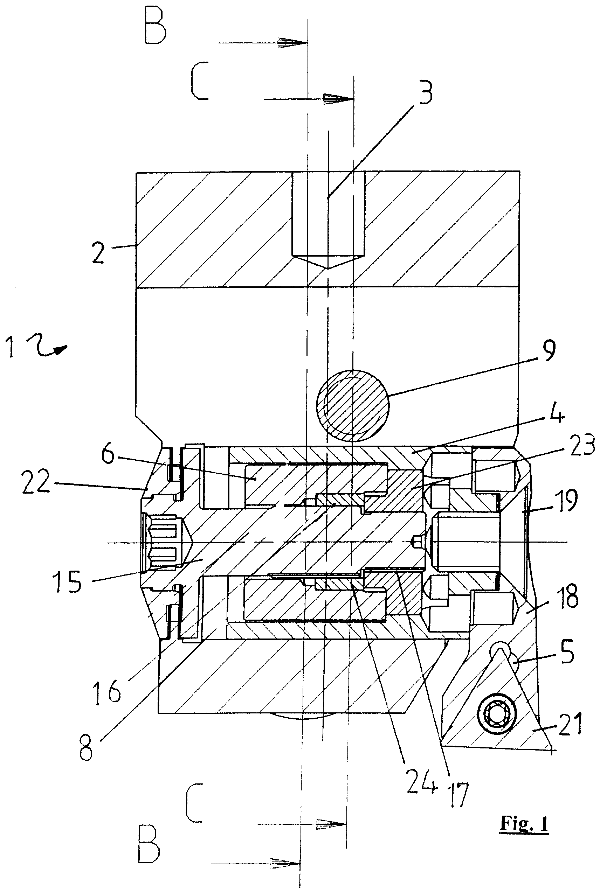

In Figur 1 ist ein Längsschnitt durch eine beispielhafte Ausführungsform des erfindungsgemäßen Ausbohrwerkzeugs 1 gezeigt. Das Ausbohrwerkzeug 1 besteht aus einem Werkzeuggrundkörper 2, der im Betrieb um die Werkzeugachse 3 rotiert. Das Ausbohrwerkzeug 1 weist des weiteren einen Werkzeugträger 4 auf, an dem mit Hilfe der Schraube 19 ein Schneidplattenhalter 18 mit einem Schneidplattensitz angebracht ist. In dem Schneidplattensitz ist eine Schneidplatte 21 aufgenommen. In den Werkzeuggrundkörper 2 ist eine Bohrung 8 eingebracht, in die sowohl der Werkzeugträger 4 als auch ein Gegengewicht 6 auf einem Schraubelement 15 eingesetzt sind.

Mit Hilfe des Schraubelements 15, das mit einem Gewindegang 17 in eine Gewindebohrung des Werkzeugträgers 4 eingreift, kann der Werkzeugträger in radialer Richtung, d.h. in Figur 1 nach rechts oder nach links, bewegt werden. Durch diese Maßnahme ist es möglich, den Bearbeitungsradius einer auf dem Schneidplattensitz 5 aufgenommenen Schneidplatte präzise einzustellen.

Das Schraubelement 15 hat zwei gegenläufige Gewinde, so daß beim Drehen des Schraubelements 15 beispielsweise eine Verschiebung des Werkzeugträgers 4 samt dem mit Hilfe der Schraube 19 an dem Werkzeugträger 4 befestigten Schneidplattenhalter 18, in dem die Schneidplatte 21 sitzt, in radialer Richtung nach außen, d.h. in Figur 1 nach rechts erfolgt, während das Gegengewicht 6 in Figur 1 nach links bewegt wird, so daß jederzeit das Ausbohrwerkzeug ausgewuchtet ist.

Die Anordnung von Gegengewicht 6 und Werkzeugträger 4 auf einer Achse hat verschiedene Vorteile. Zum einen muß dadurch nur eine entsprechende Bohrung im Werkzeuggrundkörper 2 vorgesehen werden, was zu einer höheren Stabilität des Ausbohrwerkzeugs 1 führt. Zum anderen kann das Ausbohrwerkzeug 1 deutlich kompakter ausgeführt werden.

Darüber hinaus wird durch die Anordnung von Gegengewicht 6 und Werkzeugträger 4 auf einer Achse sichergestellt, daß die Kraftmomente im Werkzeug reduziert werden oder sich im Idealfall die Kräfte aufheben, so daß keine Kraftmomente entstehen.

In der gezeigten Ausführungsform ist das Gegengewicht 6 aus einem Material gefertigt, welches eine höhere Dichte hat als das Material, aus dem der Werkzeugträger 4 gefertigt ist. Da im allgemeinen der Werkzeugträger 4 samt Schneidplattenhalter 18 und Schneidplatte 21 vergleichsweise große Abmessungen hat, kann durch die Wahl eines Materials höherer Dichte für das Gegengewicht 6 dieses kleiner dimensioniert werden, was ebenfalls zu einer kompakteren Bauweise des Ausbohrwerkzeugs 1 führt.

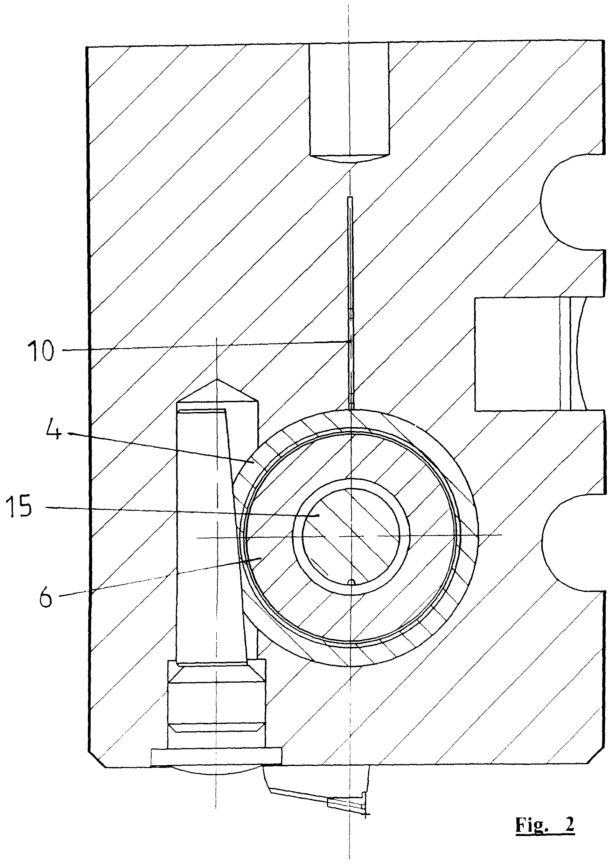

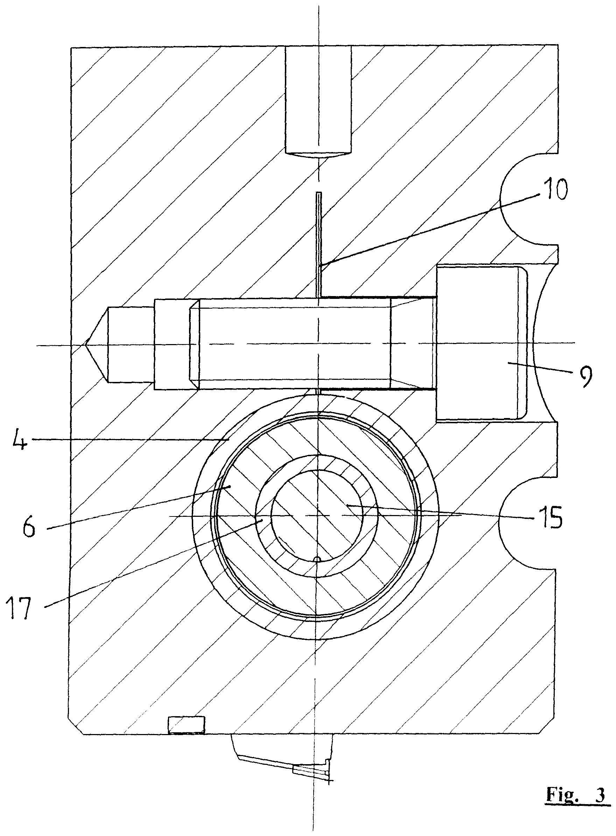

In Figur 1 ist ein Klemmelement 9 gezeigt. Wie in den Figuren 2 und 3 zu erkennen ist, ist der Werkzeuggrundkörper 2 mit einem Schlitz 10 versehen, so daß beim Festziehen der Klemmschraube 9 der Werkzeuggrundkörper elastisch verformt wird und Werkzeugträger 4 und gegebenenfalls auch Gegengewicht 6 in dem Werkzeuggrundkörper 2 verspannt werden. Dadurch ist gewährleistet, daß es während des bearbeitenden Betriebs des Ausbohrwerkzeugs zu keinerlei unbeabsichtigter Bewegung von Gegengewicht 6 und/oder Werkzeugträger 4 kommt.

Die Klemmschraube 9 tritt dabei nicht direkt mit Gegengewicht 6 oder Werkzeugträger 4 in Eingriff.

Weiterhin besteht grundsätzlich die Möglichkeit, verschiedene Werkzeugträger 4 und/oder Schneidplattenhalter 18 zur Verfügung zu stellen, die zwar jeweils das gleiche Gewicht haben, jedoch in der Anordnung anders ausgebildet sind, so daß der mögliche einstellbare Radius der Schneidplatte 21 vergrößert wird.

Das Schraubelement 15 oder die Abdeckung 22 kann auch eine Skalierung aufweisen.

### Bezugszeichenliste

- 1: Ausbohrwerkzeug
- 2: Werkzeuggrundkörper
- 3: Werkzeugachse
- 4: Werkzeugträger
- 5: Schneidplattensitz
- 6: Gegengewicht
- 8: Bohrung
- 9: Klemmeinrichtung
- 10: Schlitz
- 15: Schraubelement
- 16,17: Gewinde
- 18: Schneidplattenhalter
- 19: Schneidplattenhalterklemmschraube
- 21: Schneidplatte
- 22: Abdeckung gegebenenfalls mit Skalierung
- 23: Buchse des Werkzeugträgers
- 24: Gewindebuchse des Gegengewichts

## Patentansprüche

1. Ausbohrwerkzeug (1) mit einem Werkzeuggrundkörper (2) und einem relativ zu diesem einstellbaren Werkzeugträger (4) sowie einem Gegengewicht (6), das mit dem Werkzeugträger (4) derart gekoppelt ist, daß bei einer Bewegung des Werkzeugträgers (4) in eine Richtung eine Bewegung des Gegengewichts (6) im wesentlichen in die entgegengesetzte Richtung erfolgt, wobei sowohl Werkzeugträger (4) als auch Gegengewicht (6) jeweils zumindest teilweise in einer Bohrung (8) im Werkzeuggrundkörper angeordnet sind, **dadurch gekennzeichnet, daß** Werkzeugträger (4) und Gegengewicht (6) in derselben Bohrung im Werkzeuggrundkörper angeordnet sind.

2. Ausbohrwerkzeug nach Anspruch 1, **dadurch gekennzeichnet, daß** der Werkzeuggrundkörper (2) eine Klemmeinrichtung (9) aufweist, mit deren Hilfe der Werkzeuggrundkörper (2) elastisch verformt werden kann, so daß sowohl Werkzeugträger (4) als auch Gegengewicht (6) jeweils in der Bohrung (8) eingeklemmt werden.

3. Ausbohrwerkzeug nach Anspruch 2, **dadurch gekennzeichnet, daß** der Werkzeuggrundträger (2) einen Schlitz (10) aufweist und mit Hilfe der Klemmeinrichtung (9) der Werkzeuggrundkörper (2) derart elastisch verformt werden kann, daß der Schlitz (10) schmaler wird.

4. Ausbohrwerkzeug nach Anspruch 2 oder 3, **dadurch gekennzeichnet, daß** die Klemmeinrichtung (9) aus einer Klemmschraube (9) besteht, die in eine Gewindebohrung (11) im Werkzeuggrundkörper (2) eingreift.

5. Ausbohrwerkzeug nach einem der Ansprüche 2 bis 4, **dadurch gekennzeichnet, daß** die Klemmeinrichtung (9) weder mit dem Werkzeugträger (4) noch mit dem Gegengewicht (6) in direktem Kontakt steht.

6. Ausbohrwerkzeug nach einem der Ansprüche 1 bis 5, **dadurch gekennzeichnet, daß** eine Führung zum Führen des Gegengewichts (6) in der Bohrung vorgesehen ist, wobei die Führung vorzugsweise eine Verdrehsicherung bereitstellt, die ein Drehen des Gegengewichts um die Achse der Bohrung, in der das Gegengewicht (6) angeordnet ist, im wesentlichen verhindert.

7. Ausbohrwerkzeug nach Anspruch 5, **dadurch gekennzeichnet, daß** die Führung aus einer Führungsausnehmung und einem Führungsvorsprung, vorzugsweise aus einer Führungsnut und einem Führungsstift besteht, wobei die Führungsausnehmung an einem der Elemente, Gegengewicht (6) oder Werkzeuggrundkörper (2), vorzugsweise am Gegengewicht (6), vorgesehen ist und der Führungsvorsprung an dem anderen Element angeordnet ist.

8. Ausbohrwerkzeug nach Anspruch 6 oder 7, **dadurch gekennzeichnet, daß** die Führung aus einem Führungsbolzen besteht, der innerhalb einer Bohrung in dem Gegengewicht (6) angeordnet ist.

9. Ausbohrwerkzeug nach einem der Ansprüche 1 bis 8, **dadurch gekennzeichnet, daß** zur Bewegung des Werkzeugträgers (4) ein Schraubelement (15) mit zwei Gewinden (16, 17) vorgesehen ist, wobei das eine Gewinde (17) mit dem Werkzeugträger (4) und das andere Gewinde (16) mit dem Gegengewicht (6) in Eingriff steht.

10. Ausbohrwerkzeug nach einem der Ansprüche 1 bis 9, **dadurch gekennzeichnet, daß** Werkzeugträger (4) und Gegengewicht (6) aus Materialien unterschiedlicher Dichte bestehen, wobei vorzugsweise das Material des Gegengewichts (6) eine höhere Dichte hat als das Material des Werkzeugträgers (4).

## Claims

1. A boring tool (1) comprising a main tool body (2) and a tool holder (4) which is adjustable relative thereto, as well as a counterweight (6) coupled to the tool holder (4) in such a way that upon a movement of the tool holder (4) in one direction a movement of the counterweight (6) occurs substantially in the opposite direction, wherein both the tool holder (4) and also the counterweight (6) are respectively arranged at least in part in a bore (8) in the main tool body, **characterized in that** the tool holder (4) and the counterweight (6) are arranged in the same bore in the main tool body.

2. A boring tool as set forth in claim 1 **characterized in that** the main tool body (2) has a clamping device (9), by means of which the main tool body (2) can be elastically deformed so that both the tool holder (4) and also the counterweight (6) are respectively clamped in the bore (8).

3. A boring tool as set forth in claim 2 **characterized in that** the main tool body (2) has a slot (10) and the main tool body (2) can be elastically deformed by means of the clamping device (9) in such a way that the slot (10) becomes narrower.

4. A boring tool as set forth in claim 2 or claim 3 **characterized in that** the clamping device (9) comprises a clamping screw (9) engaging into a screwthreaded bore (11) in the main tool body (2).

5. A boring tool as set forth in one of claims 2 through 4 **characterized in that** the clamping device (9) is not in direct contact either with the tool holder (4) or with the counterweight (6).

6. A boring tool as set forth in one of claims 1 through 5 **characterized in that** there is provided a guide means for guiding the counterweight (6) in the bore, wherein the guide means preferably provides a rotation-preventing means which substantially prevents rotation of the counterweight about the axis of the bore in which the counterweight (6) is arranged.

7. A boring tool as set forth in claim 5 **characterized in that** the guide means comprises a guide opening and a guide projection, preferably a guide groove and a guide pin, wherein the guide opening is provided on one of the elements being the counterweight (6) or the main tool body (2), preferably on the counterweight (6), and the guide projection is arranged on the other element.

8. A boring tool as set forth in claim 6 or claim 7 **characterized in that** the guide means comprises a guide bolt arranged within a bore in the counterweight (6).

9. A boring tool as set forth in one of claims 1 through 8 **characterized in that** a screw element (15) having two screwthreads (16, 17) is provided for the movement of the tool holder (4), wherein the one screwthread (17) is in engagement with the tool holder (4) and the other screwthread (16) is in engagement with the counterweight (6).

10. A boring tool as set forth in one of claims 1 through 9 **characterized in that** the tool holder (4) and the counterweight (6) comprise materials of different density, wherein preferably the material of the counterweight (6) is of a higher density than the material of the tool holder (4).

## Revendications

1. Outil d'alésage (1) avec un corps d'outil de base (2) et un porte-outil (4) réglable par rapport à ce dernier et avec un contrepoids (6) qui est accouplé au porte-outil (4) de façon telle que, lors d'un mouvement du porte-outil (4) dans une direction, un mouvement du contrepoids (6) sensiblement dans la direction opposée se produit, aussi bien le porte-outil (4) que le contrepoids (6) étant disposés chacun au moins partiellement dans un alésage (8) dans le corps d'outil de base, **caractérisé en ce que** le porte-outil (4) et le contrepoids (6) sont disposés dans le même alésage dans le corps d'outil de base.

2. Outil d'alésage selon la revendication 1, **caractérisé en ce que** le corps 'outil de base (2) comprend un dispositif de serrage (9) à l'aide duquel le corps d'outil de base (2) peut être déformé élastiquement, si bien qu'aussi bien le porte-outil (4) que le contrepoids (6) peuvent être serrés chacun dans l'alésage (8).

3. Outil d'alésage selon la revendication 2, **caractérisé en ce que** le corps d'outil de base (2) comprend une fente (10) et **en ce que** le corps d'outil de base (2) est élastiquement déformable à l'aide du dispositif de serrage d'une manière telle que la fente (10) devienne moins large.

4. Outil d'alésage selon la revendication 2 ou 3, **caractérisé en ce que** le dispositif de serrage (9) consiste en une vis de serrage (9) qui s'engage dans un taraudage (11) dans le corps d'outil de base (2).

5. Outil d'alésage selon l'une des revendications 2 à 4, **caractérisé en ce que** le dispositif de serrage (9) n'est en contact direct ni avec le porte-outil (4) ni avec le contrepoids (6).

6. Outil d'alésage selon l'une des revendications 1 à 5, **caractérisé en ce qu'**il est prévu un guidage pour guider le contrepoids (6) dans l'alésage, le guidage mettant à disposition de préférence un dispositif anti-rotation qui empêche essentiellement une rotation du contrepoids autour de l'axe de l'alésage dans lequel le contrepoids (6) est disposé.

7. Outil d'alésage selon la revendication 5, **caractérisé en ce que** le guidage consiste en un évidement de guidage et une saillie de guidage, de préférence en une rainure de guidage et une broche de guidage, l'évidement de guidage étant prévu sur un des éléments, soit le contrepoids (6) soit le corps d'outil de base (2), de préférence sur le contrepoids (6), et la saillie de guidage étant disposée sur l'autre élément.

8. Outil d'alésage selon la revendication 6 ou 7, **caractérisé en ce que** le guidage consiste en un boulon de guidage qui est disposé à l'intérieur d'un alésage dans le contrepoids (6).

9. Outil d'alésage selon l'une des revendications 1 à 8, **caractérisé en ce que**, pour mouvoir le porte-outil (4), il est prévu un élément à visser (15) comportant deux filetages (16, 17), un des filetages (17) étant engagé dans le porte-outil (4) et l'autre filetage (16) étant engagé dans le contrepoids (6).

10. Outil d'alésage selon l'une des revendications 1 à 9, **caractérisé en ce que** le porte-outil (4) et le contrepoids (6) sont réalisés en des matériaux de densités différentes, le matériau du contrepoids (6) ayant de préférence une densité plus élevée que le matériau du porte-outil (4).
